# EUROPEAN PATENT SPECIFICATION

(11) **EP 4 468 478 B1**
(45) Date of publication and mention of the grant of the patent: **22.10.2025**
(21) Application number: 22924336.5
(22) Date of filing: 17.11.2022
(51) Int. Cl.: H01M 50/211, B60L 50/64, H01M 50/204, H01M 10/613, H01M 10/625, H01M 10/6554, H01M 10/6556, H01M 50/358, H01M 50/249, H01M 10/6567, H01M 50/262, H01M 50/591

(54) **BATTERY PACK AND VEHICLE HAVING SAME**
BATTERIEPACK UND FAHRZEUG DAMIT
BLOC-BATTERIE ET VÉHICULE LE COMPORTANT

(30) Priority: 26.01.2022 KR 20220011216
(43) Date of publication of application: 27.11.2024
(73) Proprietor: LG Energy Solution, Ltd., Seoul 07335 (KR)
(72) Inventor: SHIN, Juhwan, Daejeon 34122 (KR); LEE, Hyoungsuk, Daejeon 34122 (KR); KIM, Youngjin, Daejeon 34122 (KR); LEE, Taekyeong, Daejeon 34122 (KR); HEO, Namhoon, Daejeon 34122 (KR)
(74) Representative: Plasseraud IP
(86) International application number: PCT/KR2022/018150
(87) International publication number: WO 2023/146083

(56) References cited:
- CN-A- 109 686 894
- CN-A- 110 611 064
- CN-A- 111 224 034
- CN-A- 112 490 579
- CN-U- 209 087 938
- CN-U- 212 257 472
- KR-A- 20200 143 977
- KR-A- 20210 109 025
- KR-A- 20210 134 165
- KR-B1- 102 027 124
- US-A1- 2021 167 441

## Description

### [Technical Field]

This application •ir claims priority to Patent Application No. 10-2022-0011216 filed in the Republic of Korea on January 26, 2022.

The present disclosure relates to a battery pack for a vehicle accommodating a secondary battery and a vehicle including the same.

### [Background Art]

Electric vehicles using electricity as a driving force are becoming widespread. An electric vehicle is equipped with secondary batteries storing energy. The secondary battery is provided in a vehicle as a battery pack connected in parallel and/or series to provide voltage and current suitable for driving a motor to drive the vehicle.

Since it is quite heavy, the battery pack is mounted on the floor of a vehicle to ensure the driving stability of the vehicle. Accordingly, the battery pack generally has a rectangular parallelepiped shape with a low height.

To secure the rigidity of the rectangular battery pack with a wide area and a low height, a reinforcing member having a shape of a crossbeam is usually provided between secondary cells accommodated in the battery pack.

However, when the reinforcing member has such a crossbeam shape, the space for accommodating the secondary battery is reduced as much as the space occupied by the reinforcing member.

Meanwhile, when a short circuit occurs in the secondary battery due to an external shock or the like, heat might be generated and this heat might cause the secondary battery to ignite or explode. Therefore, a structure is required which may prevent the secondary battery from exploding by quickly discharging gas generated when the secondary battery generates heat at an abnormally high temperature. Accordingly, a venting structure for venting the gas generated in the secondary battery is separately provided in the battery pack.

However, the structure for the gas venting also occupies a space capable of accommodating the secondary battery, and thus the space capable of accommodating the secondary battery is reduced.

Such a conventional battery pack structure is disclosed in KR 2065099 B1, KR 2021-0017273 A, KR 2018-0006150 A, and KR 2021-0041950 A. US 2021/167441 A1 or CN 111224034 A also disclose similar battery packs.

### [Description of Disclosure]

### [Technical Problems]

Accordingly, one objective of the present disclosure is invented to solve the above-noted disadvantages of the prior art, and to provide a battery pack structure in which a structure for reinforcing rigidity does not occupy a space for accommodating a secondary battery, and a vehicle to which the battery pack is applied.

Further, another objective of the present disclosure is to provide a battery pack structure that may quickly discharge gas generated due to abnormal heat of a secondary battery and also may not occupy a space accommodating the secondary battery, and a vehicle including the same.

Still further, a further objective of the present disclosure is to provide a battery pack structure that may sufficiently ensure rigidity with a simple structure and may secure a space for accommodating a secondary battery, and a vehicle including the same.

Still further, a further objective of the present disclosure is to provide a battery pack structure that may secure a space for accommodating a secondary battery, even with a simple structure configured to suppress prevention and spread of a fire due to abnormal heat of a secondary battery, and a vehicle including the same.

Objects of the present invention are not limited to the above-described objects, and other objects and advantages of the present invention will be understood by the following description and will be more definitely understood through the embodiments of the present invention. It is also to be easily understood that the objectives and advantages of the present invention may be realized and attained by means and a combination thereof described in the appended claims.

### [Technical Solutions]

A battery pack of the present invention invented to solve the above-noted disadvantages is defined in claim 1. It includes a quadrilateral lower case extending in a first direction and a second direction crossing the first direction.

The first direction may be a width direction of a rectangular shape and the second direction may be a longitudinal direction of a rectangular shape.

The first direction may be a direction in which a short side of the rectangular shape extends, and the second direction may be a direction in which a long side of the rectangular shape extends.

The first direction may be a direction corresponding to a width direction of a vehicle, and the second direction may be a direction corresponding to a front-rear direction of a vehicle.

The battery pack may be a flat rectangular parallelepiped shape with a low vertical height.

The lower case includes:
- a quadrilateral, in particular rectangular, base plate,
- a quadrilateral, in particular rectangular, under cover,
a side pack frame connected to an edge of the base plate and an edge of the under cover.

The base plate and the under cover face each other in a vertical direction, and are spaced apart a preset distance apart from each other.

The base plate is disposed more upward than the under cover.

The side pack frame may include a pair of members extending in a first direction and a pair of members extending in a second direction.

The pair of the members extending in the first direction may be short side members.

The pair of the members extending in the second direction may be long side members.
A support beam is provided between the base plate and the under cover, and extends in a first direction;

Both extension-direction ends of the support beam may be connected to the side pack frame.

The support beam may be connected to the pair of the members extending from the side pack frame in the second direction.

The side pack frame further includes a wall frame extending more upward than the base plate.

A plurality of pouch units is disposed inside a space surrounded by the wall frame as an upper space of the base plate.

The support beam may support the pouch units and reinforce rigidity of the lower case.

No member for reinforcing rigidity of the lower case may be disposed between two pouch units adjacent to each other in the first direction or the second direction. Accordingly, more pouch units may be accommodated inside the battery pack.

The plurality of pouch units may be in contact with each other in the second direction.

The support beam may be provided in plural.

The plurality of support beams may be spaced a preset distance apart from each other in the second direction.

The plurality of support beam may be aligned in parallel with each other.

Both extension-direction ends of the support beam may be connected to the side pack frame, thereby further reinforcing rigidity.

A base vent hole is provided in a predetermined area of the base plate facing the support beam.

A beam vent hole is provided on an upper surface of the support beam facing the base vent hole.

The base vent hole and the beam vent hole are in communication with each other.

The support beam may include a beam hollow portion having a hollow along a direction in which the support beam extends.

The support beam may have a rectangular cross section, and a top of the support beam may be an open 'U'-shape.

The beam vent hole and the beam hollow portion may be in communication with each other.

An end vent hole may be provided at one end of at least one side of the support beam.

The end vent hole may be provided at each of the both ends of the support beam.

The beam hollow portion and the end vent hole may be in communication with each other.

A beam connection hole in communication with the end vent hole may be provided at the side pack frame in an area where the side pack frame is connected to the support beam.

The side pack frame may include a frame hollow portion extending in a second direction.

The side pack frame may further include an edge frame extending more outward in a lateral direction than the base plate and the under cover.

A lateral-direction inner end of the edge frame may be connected to a lower area of the wall frame.

The frame hollow portion may be provided in the edge frame.

The frame hollow portion may be in communication with the beam connection hole.

The lower case may further include a pack venting device configured to discharge gas leaking from the pouch unit.

The pack venting device may be provided in the member of the side pack frame extending in the first direction, that is, a short side member.

The frame hollow portion may be connected with the pack venting device.

The base plate and the pouch unit may be secured to each other by a resin disposed between the base plate and the pouch unit.

A cooling plate may be disposed on a lower surface of the base plate and the cooling plate may include a cooling path.

The support beam may be disposed lower than the cooling plate.

The base bent hole of the base plate may be provided in an area where the cooling path is not disposed.

A corresponding vent hole may be provided in an area of the cooling plate facing the base vent hole.

The base vent hole and the corresponding vent hole may be in communication with each other.

The base plate and the pouch unit may be secured to each other by the resin disposed between the base plate and the pouch unit.

The resin may not be disposed on an area extending along a second direction to provide a plurality of base vent holes arranged along the second direction.

A vent hole may be provided on a lower surface of the pouch unit at a position corresponding to the area where the resin is not disposed, and configured to discharge gas generated inside the pouch unit to an outside.

Gas leaking from the pouch unit may be discharged by the pack venting device through the base vent hole, the corresponding hole, the beam vent hole, the beam hollow portion, the end vent hole, the beam connection hole, and the frame hollow portion in a flow order.

The pouch unit may be a pouch unit (e.g., SPU: Scalable Pouch Unit).

A vehicle according to an embodiment of the present disclosure may include the battery pack mounted therein.

### [Advantageous Effects]

The battery pack according to the present disclosure may secure more space for accommodating the secondary battery, thereby increasing the electricity capacity of the battery pack.

In addition, the battery pack according to the present disclosure may secure the sufficient electricity capacity and ensure rigidity of the battery pack at the same time.

In addition, the battery pack according to the present disclosure may use the structure for reinforcing the rigidity of the lower case as the gas discharge path, thereby reducing the weight of the battery pack while securing the space for accommodating the pouch unit.

In addition, the battery pack according to the present disclosure may be lighter and have the larger electricity capacity, thereby securing the more movable distance of the vehicle when it is mounted in the vehicle.

In addition to the above-described effects, specific effects of the present invention will be described together with the following detailed description for implementing the present invention.

### [Brief Description of Drawings]

FIG. 1 is a front perspective view of a lower case applied to a battery pack according to the present disclosure;
FIG. 2 is a rear perspective view of the lower case of FIG. 1;
FIG. 3 is a bottom view of the lower case of FIG. 1;
FIG. 4 is a bottom view of a state where an undercover is deleted from FIG. 3;
FIG. 5 is a bottom view of a state where a support beam is deleted from FIG. 4;
FIG. 6 is a VI sectional view of FIGS. 1 and 2;
FIG. 7 is a perspective view of a pouch unit disposed inside a lower case;
FIGS. 8 and 9 are views showing a process of disposing the pouch unit of FIG. 7 inside the lower case of FIG. 1;
FIG. 10 is a view showing a state where the pouch unit is completely accommodated in the lower case of FIG. 1;
FIG. 11 is a XI sectional view of FIG. 10; and
FIG. 12 a perspective view of a vehicle to which the battery pack is applied.

### [Description of Reference Numerals]

3: Battery back 5: Vehicle 10: Lower case 20: Base plate 23: Base vent hole 30: Cooling plate 31: Cooling path 33: Corresponding vent hole 40: Resin 50: Support beam 51: Beam hollow portion 53: Beam vent hole 55: End vent hole 60: Side pack frame 61: Wall frame 63: Edge frame 65: Beam connection hole 67: Frame hollow portion 70: Under cover 75: Partition wall 80: Pack venting device 90: Pouch unit (SPC: Scalable Pouch Unit) 91: Vent hole

### [DESCRIPTION OF SPECIFIC EMBODIMENTS]

The above objects, features and advantages will be described later in detail with reference to the accompanying drawings, and accordingly, those skilled in the art to which the present invention belongs will be able to easily implement the technical idea of the present invention. In describing the present invention, if it is determined that the detailed description of the known technology related to the present invention may unnecessarily obscure the subject matter of the present invention, the detailed description will be omitted. Hereinafter, preferred embodiments according to the present invention will be described in detail with reference to the accompanying drawings. In the drawings, the same reference numerals are used to indicate the same or similar components.

Although "first", "second", and the like may be used to describe various components, these components are not limited by these terms. These terms are only used to distinguish one component from another component, and unless otherwise stated, the first component may be the second component.

Throughout the specification, unless otherwise stated, each component may be singular or plural.

Hereinafter, the arrangement of an arbitrary component on the "upper portion (or lower portion)" or "upper (or lower)" of a component may mean that an arbitrary component is placed in contact with the upper (or lower) surface of the component. In addition, it may mean that other components may be interposed between the component and any component disposed on (or under) the component.

In addition, when a component is described as "linked", "coupled" or "connected" to another component, the components may be directly connected or connected to each other, but other components may be "interposed" between each component. ", or each component may be "linked", "coupled" or "connected" through other components.

Throughout the specification, unless otherwise stated, each component may be singular or plural.

Singular expressions used herein include plural expressions unless the context clearly dictates otherwise. In this application, terms such as "consisting of" or "comprising" should not be construed as necessarily including all of the various components or steps described in the specification. It should be construed that it may not include some of the components or some of the steps. Or may further include additional components or steps.

Throughout the specification, when it says "A and/or B", it means A, B or A and B, unless otherwise specified, and when it says "C to D", it means C or more and D or less, unless otherwise specified.

Hereinafter, preferred embodiments of the present disclosure will be described referring to the accompanying drawings.

For description convenience, on the plane including a first direction and a second direction, which will be described later, a direction directed to an inside of a rectangular lower case is referred to as an inward direction, and a direction directed to an outside of the lower case is referred to as an outward direction.

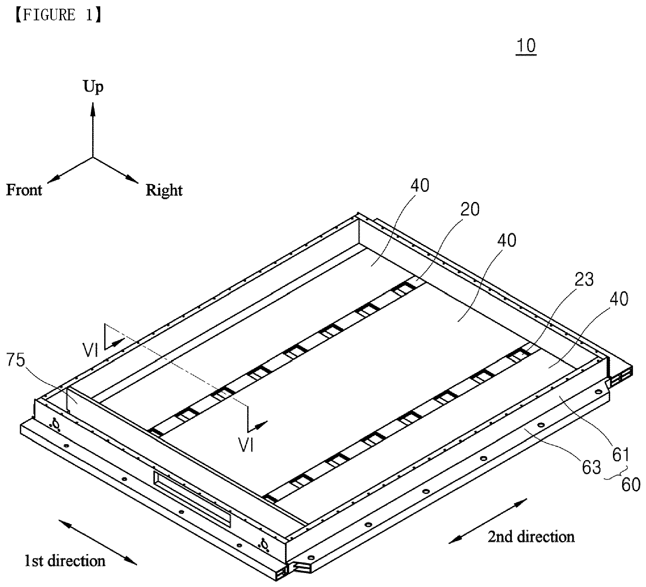

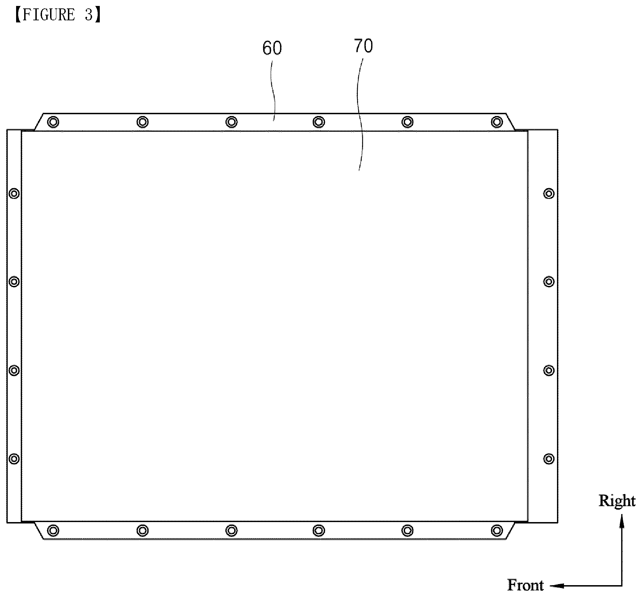

Hereinafter, referring to FIGS. 1 to 6, an embodiment of a lower case 10 provided in a battery pack 3 applied to a vehicle according to an embodiment of the present disclosure will be described.

The lower case 10 may extend in a width direction (i.e., a first direction) and a front-rear direction (i.e., a second direction), and may be applied to a battery pack having a low height. That is, the battery pack 3 may have a flat wide rectangular parallelepiped shape.

The lower case 10 may have a rectangular plane extending in the width direction and the front-rear direction crossing the width direction, and a predetermined height.

A side corresponding to the width direction of the lower case 10 may be a short side, and a side corresponding to the front-rear direction may be a long side.

The extending direction of the short side may be the same as the width direction of a vehicle in which the battery pack 3 is installed. The extending direction of the long side may be the same as the front-rear direction of the vehicle. However, the installation direction of the battery pack 3 according to the present disclosure is not limited thereto.

The lower case 10 may include a rectangular base plate 20 and a rectangular under cover 70 corresponding to the base plate 20.

The under cover 70 may have a shape of rectangular flat plate slightly larger than the base plate 20.

The lower case 10 may further include a side pack frame 60 connected to an edge of the base plate 20 and an edge of the under cover 70.

The side pack frame 60 may have an approximately 'L' -shaped cross section. The side pack frame 60 may include a wall frame 61 connected with the base plate 20 and extending upward, and an edge frame 63 connected with the under cover 70 and extending outward and rearward.

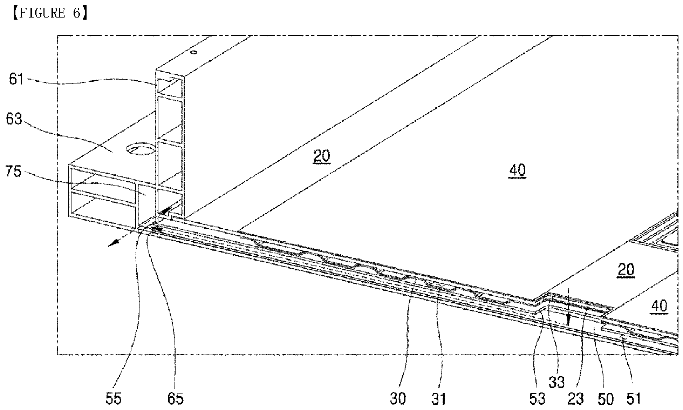

Referring to FIG. 6, the edge frame 63 may be connected to a lower outer surface of the wall frame 61 and extend outward from the wall frame 61. A lower end of the edge frame 63 may extend lower than the lower end of the wall frame 61. Accordingly, an inner surface of the edge frame 63 may be disposed more outward than an inner surface of the wall frame 61, and a lower surface of the edge frame 63 may be disposed lower than a lower surface of the wall frame 61. The lower surface of the wall frame 61 may be disposed more inward than the lower surface of the edge frame 63.

The wall frame 61 and the edge frame 63 may be hollow extruded members having predetermined partition walls therein. Accordingly, the side pack frame 60 may secure rigidity while minimizing the weight.

A step may be provided on an inside of the lower surface of the wall frame 61. An edge of the base plate 20 may be fixedly fitted to the step, so that the base plate 20 and the wall frame 61 may be mutually regulated at the positions and fixed to each other. In an embodiment, the lower surface of the base plate 20 and the lower surface of the wall frame 61 may form the same plane.

A step may be provided on an inside of the lower surface of the edge frame 63 and an edge of the under cover 70 may be fixedly fitted to the step, so that the under cover 70 and the edge frame 63 may be mutually regulated at the positions and fixed to each other. In an embodiment, the lower surface of the under cover 70 and the lower surface of the edge frame 61 may form the same plane.

Accordingly, the base plate 20 may be disposed higher than the under cover 70, and may be spaced apart from the under cover 70, facing each other in a vertical direction.

The side pack frame 60 may be coupled to four sides of the base plate 20 and four sides of the under cover 70, while surrounding the sides. The side pack frame 60 may include a pair of short side members extending in a first direction, and a pair of long side members extending in a second direction.

The wall frame 61 may extend more upward than an upper surface of the base plate 20. Accordingly, a predetermined space may be defined by the inner surface of the wall frame 61 and the upper surface of the base plate 20, and a plurality of pouch units 90 may be disposed inside the space.

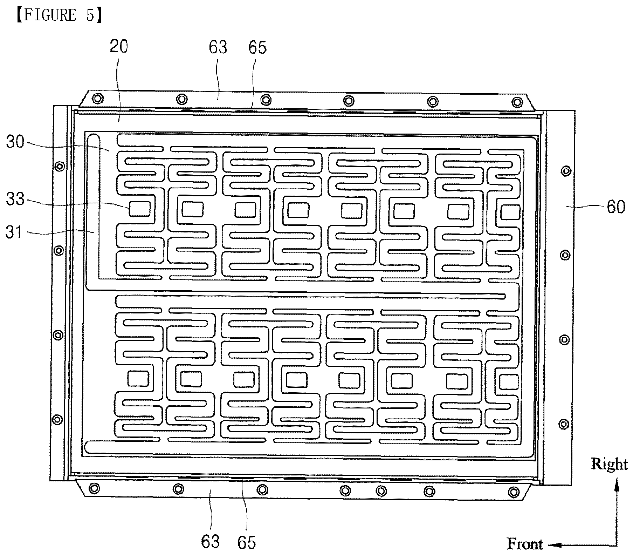

A cooling plate 30 may be disposed on a lower surface of the base plate as shown in FIG. 5. The cooling plate 30 may have a predetermined portion in close contact with the lower surface of the base plate 20 and another portion spaced a preset distance apart from the base plate 20. The portion spaced a preset distance apart from the base plate 20 and a corresponding portion of the lower surface of the base plate 20 may define a cooling path 31 through which a cooling fluid flows.

The cooling fluid for cooling a secondary battery may be supplied to the cooling path 31 through an inlet of the cooling path 31, and cool the secondary battery while flowing through the cooling path 31 to return through an outlet of the cooling path 31.

A support beam 50 may be provided between the cooling plate 30 and the under cover 70. An upper surface of the support beam 50 may face the cooling plate 30, in contact, and a lower surface thereof may face the under cover 70, in contact.

The support beam 50 may be an approximately flat rectangular square tube extending in the first direction. In other words, the support beam 50 may have a pipe-shaped member extending in the first direction, with a beam hollow portion 51. Accordingly, an end vent hole 55 may be provided at each of both ends of the support beam 50.

Both first-direction ends of the support beam 50 may be fixedly connected to the side pack frame 60. Specifically, the end of the support beam 50 may be fixed to a corner between a lower surface and an inner surface of the edge frame 63.

A beam connection hole 65 may be provided at the corner between the lower surface and the inner lateral surface of the edge frame 63. The beam connection hole 65 may be formed by removing a predetermined area of the lower surface and a predetermined area of the inner lateral surface of the edge frame 63.

A lower portion of the support beam 50 may be in contact with a side area of the lower surface of the edge frame 63 exposed by the beam connection hole 65. An upper portion of the support beam 50 may be in contact with a lower area of the inner lateral surface of the edge frame 63.

Through the beam connection hole 65 and the end vent hole 55 fitted to each other, the frame hollow portion 67 provided in the edge frame 63 of the side pack frame 60 and the beam hollow portion 51 of the support beam 50 may be connectedly in communication.

The connection method between the support beam 50 and the side pack frame 60 is not limited to the above-noted embodiment. For example, other connecting methods may be possible if the beam hollow portion 51 of the support beam 50 and the frame hollow portion 67 of the side pack frame 60 are connected with each other in communication.

The support beam 50 may extend in a direction corresponding to the short side of the lower case 10, and may have both ends connected to the pair of the side pack frames 60 provided in the long side of the lower case 10. Alternatively, the support beam 50 may extend in a direction corresponding to the long side of the lower case 10, and may be connected to a pair of side pack frames 60 provided in the short side of the lower case 10.

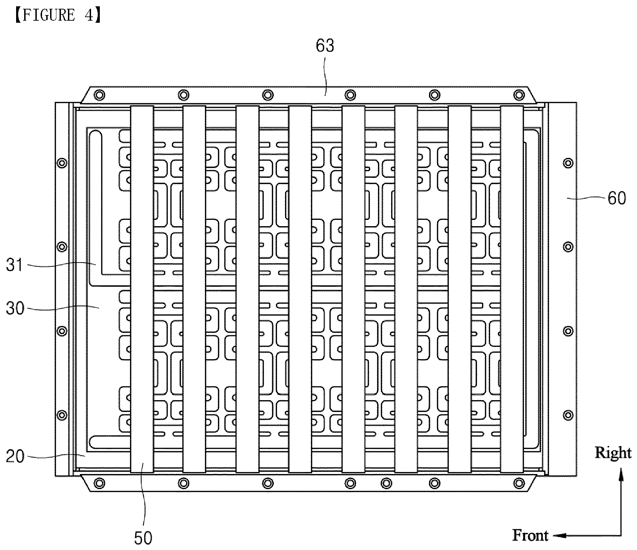

Referring to FIG. 4, a plurality of support beams 50 may be spaced a preset distance apart from each other along the second direction. Also, both ends of each support beam 50 may be connected to the side pack frame.

Referring to FIGS. 1 and 5, the base plate 20 and the cooling plate 30 may include a base vent hole 23 and a corresponding vent hole 33, respectively. The base vent hole 23 and the corresponding vent hole 33 may be provided in an area out of the cooling path 31.

In an embodiment, a pair of a base vent hole and a corresponding vent hole 33 may be provided along the first direction. The pair of the base vent hole 23 and corresponding vent hole 33 may be arranged at regular intervals along the second direction. Referring to FGS. 1 and 5, a plurality of base vent holes and the corresponding vent holes 33 may be arranged in two rows along the second direction.

Referring to FIG. 4, one support beam 50 may be disposed at a position passing under the pair of the base vent hole 23 and corresponding vent hole 33 arranged in the first direction. accordingly, the plurality of support beams 50 spaced a preset distance apart from each other along the second direction may be disposed below the pair of the base vent hole 23 and corresponding vent hole 33 spaced a preset distance apart from each other along the second direction.

A beam bent hole 53 may be provided at a position on the upper surface of the support beam 50 that corresponds to the base vent hole 23 and the corresponding vent hole 33. According to an embodiment, a pair of beam vent holes 53 may be provided on one support beam 50. That is, the support beam 50 according to the embodiment is a flat square tube having a beam hollow portion 51, is provided with end vent holes 55 at both longitudinal ends thereof, and is provided with the pair of beam vent holes 53 on an upper surface thereof.

The space accommodating the secondary battery pouch unit 90 inside the lower case 10 may be in communication with the frame hollow portion 67 of the side pack frame 60 through the base vent hole 23 of the base plate 20, the corresponding hole 33 of the cooling plate 30, the beam vent hole 53, the beam hollow portion 51, and the end vent hole 55 of the support beam 50, , and the beam connection hole 65 of the side pack frame 60 in order.

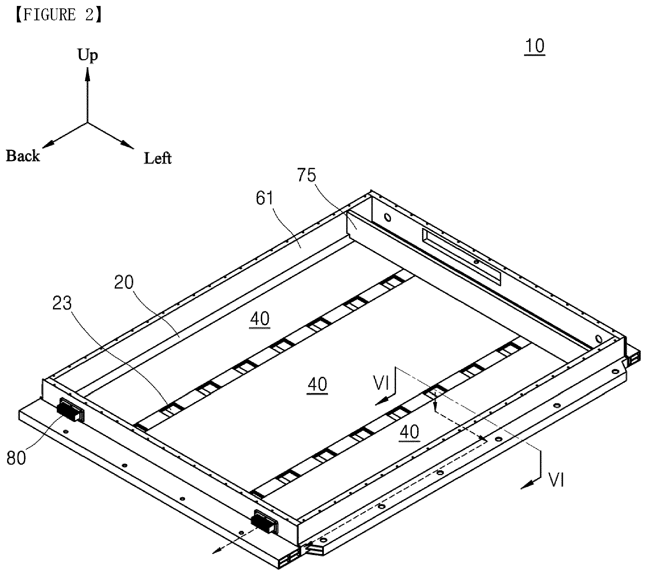

The frame hollow portion 67 may extend along the longitudinal direction of the side pack frame 60. The frame hollow portion 67 may be connected to a pack venting device 80 provided at the side pack frame 60. In an embodiment, the pack venting device 80 may be configured to be mounted to an outer surface of the wall frame 61 of the side pack frame 60 disposed on a rear short side of the lower case 10, as shown in FIG. 2.

A plurality of pouch units 90 may be disposed inside a space which is surrounded by the wall frame 61 and has a bottom defined by the base plate 20.

To secure the pouch units 90 on the base plate 20, resin 40 may be attached or coated on an upper surface of the base plate 20. The resin 40 may be provided at a predetermined portion except the base vent holes 23 disposed in two rows along the second direction. The resin 40 may not be provided at the two-row area passing the base vent holes 23 along the second direction. The resin 40 may be thin but have a predetermined thickness. Accordingly, even while the pouch unit 90 is mounted on the resin 40, the two base vent holes adjacent to each other in the second direction may be in communication through the area having no resin 40, that is, a predetermined space provided on the base plate.

The support beam 50 may be configured to support the pouch unit 90 and reinforce rigidity of the lower case 10. The support beam may provide even a path for discharging gas which might leak from the pouch unit 90.

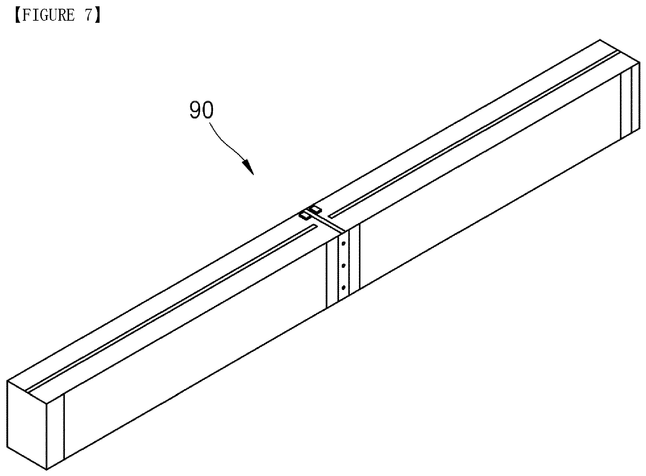

As shown in FIG. 7, the secondary battery pouch unit 90 may have a thin long parallelepiped shape. The pouch unit 90 may be a scalable pouch unit.

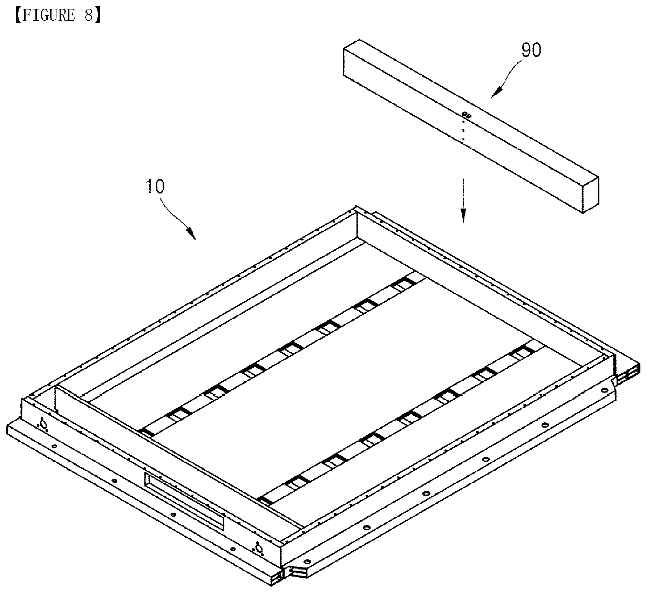

Referring to FIGS. 8 to 11, the pouch unit 90 may be accommodated inside the lower case 10 in a state of being aligned to extend in the first direction. At this time, a plurality of the pouch units 90 may be accommodated in a state of being arranged along the second direction.

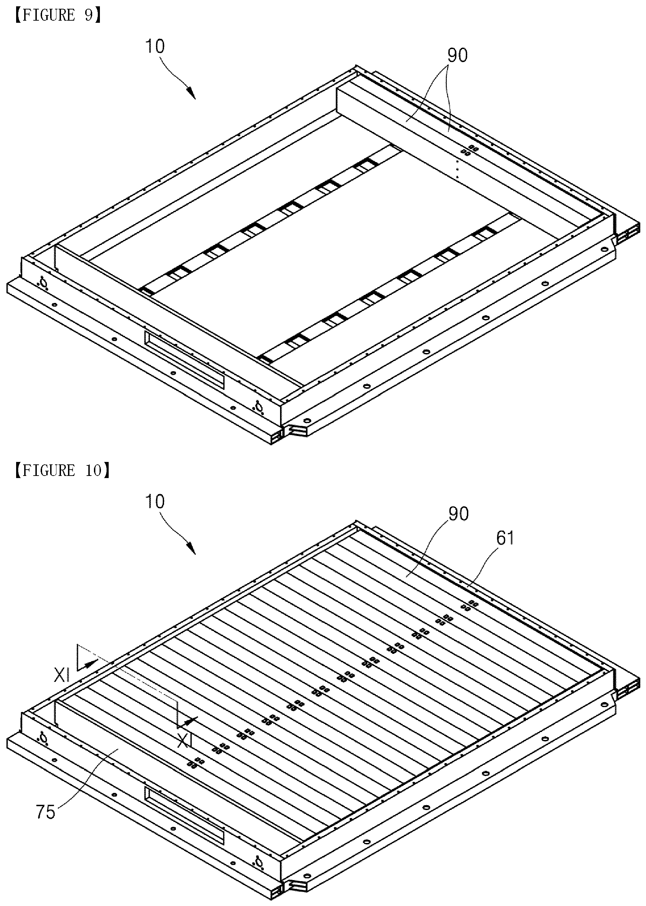

As shown in FIG. 10, no structure for reinforcing the lower case may be disposed between two pouch units 90 adjacent to each other in the second direction, in a state where the pouch units 90 are accommodated inside the lower case 10. In other words, all of the pouch units 90 may be arranged to contact each other in the second direction. Accordingly, it is possible to accommodate more pouch units 90 inside the lower case 10 of the battery pack 3.

The plurality of pouch units 90 may be disposed between the wall frame 61 provided in the rear and a partition wall 75 provided in the front. Other components may be accommodated inside a space defined between the partition wall 75 and the wall frame 61 provided in the front.

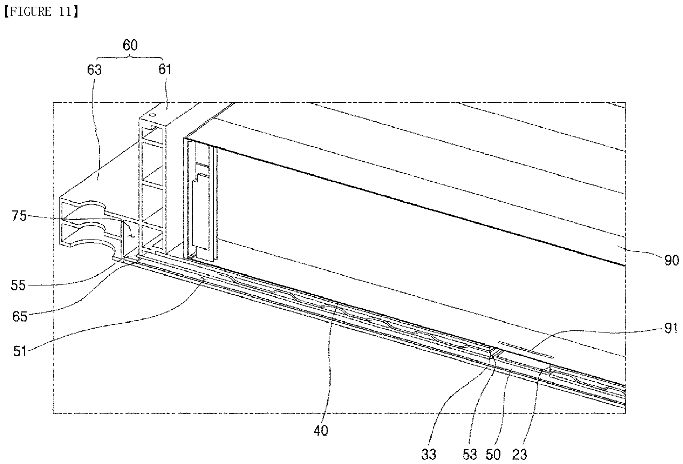

Referring to FIG. 11, a vent hole 91 may be provided in a lower area of the pouch unit 90 to discharge gas. The vent hole 91 may be a thinner area than other areas of the pouch unit 90 so that it can be normally blocked and be open first when the internal pressure of the pouch unit 90 increases.

The vent hole 91 may be arranged on an area of the base plate 20 having no resin 40. Accordingly, the vent holes 91 of some pouch units 90 may be arranged corresponding to the base vent hole 23 but the vent holes 91 of the other pouch units 90 may be arranged distant from the base vent hole 23.

Gas discharged from the pouch unit 90 through the vent hole 91 arranged at the position corresponding to the base vent hole 23 may be discharged outside through the corresponding base vent hole 23. As described above, gas discharged through the vent hole arranged distant from the base vent hole 23 may flow into the space between two adjacent base vent holes 23 not coated by the resin 40 and then discharged outside through base vent hole 23 positioned nearby.

The gas leaking from the pouch unit 90 may be discharged by the pack venting device through the base vent hole 23, the corresponding vent hole 33, the beam vent hole 53, the beam hollow portion 51, the edge vent hole 55, the beam connection hole 65, and the frame hollow portion 67 in flow order.

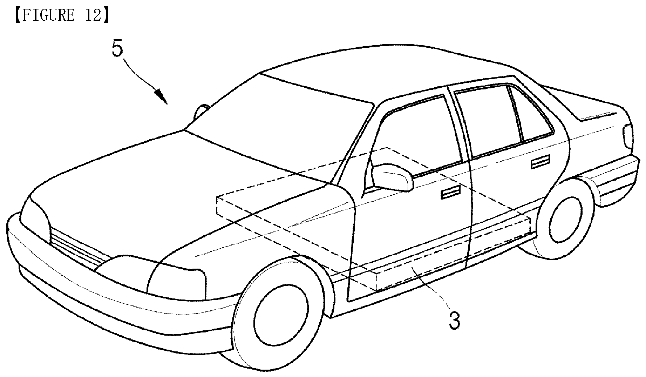

Referring to FIG. 12, the batter pack 3 including the lower case 10 may be mounted in a lower portion of the vehicle 5.

According to the above-noted description, since the support beam having a low height provided in a lower area of the secondary battery accommodating space inside the lower case reinforce the rigidity of the lower case and the venting path of leaking gas at the same time, the structure for reinforcing rigidity and the structure for discharging gas may not occupy the space for accommodating the secondary battery. Accordingly, the space for accommodating the secondary battery may be further secured and the electricity capacity of the battery pack may be further increased.

Due to the structure, a moveable distance of the vehicle may be further increased when the above-described battery pack is mounted in the vehicle.

It should be understood that the described embodiments are illustrative in all respects and not restrictive, and the scope of the present invention will be indicated by the following claims.

## Claims

1. A battery pack comprising:
a quadrilateral lower case (10) extending in a first direction and a second direction crossing the first direction,
wherein the lower case (10) comprises:
a quadrilateral base plate (20);
a quadrilateral under cover (70) spaced downward apart from the base plate (20) and to face the base plate (20);
a side pack frame (60) connected to an edge of the base plate (20) and an edge of the under cover (70), and configured to form a periphery of the lower case (10);
a support beam (50) provided between the base plate (20) and the under cover (70), and extending in the first direction;
a wall frame (61) included in the side pack frame (60) and extending more upward than the base plate (20); and
a plurality of pouch units (90) disposed inside a space surrounded by the wall frame (61) as an upper space of the base plate (20),
**characterized in that**
the battery pack further comprises
a base vent hole (23) provided at a predetermined area of the base plate (20) facing the support beam (50), and
a beam vent hole (53) provided at an upper surface of the support beam (50) facing the base vent hole (23), and
the base vent hole (23) and the beam vent hole (53) are in communication with each other.

2. The battery pack of claim 1, wherein no member for reinforcing rigidity of the lower case (10) is disposed between two pouch units (90) adjacent to each other in the first direction or the second direction.

3. The battery pack of claim 1, wherein the support beam (50) is provided in plural, and
the plurality of support beams (50) are spaced apart from each other in the second direction.

4. The battery pack of claim 1, wherein both extension-direction ends of the support beam (50) are connected to respective sides of the side pack frame (60).

5. The battery pack of claim 1, wherein
the support beam (50) comprises a beam hollow portion (51) that is hollow along a direction in which the support beam (50) extends, and
the beam vent hole (53) and the beam hollow portion (51) are in communication with each other.

6. The battery pack of claim 5, comprising an end vent hole (55) provided at one end of at least one side of the support beam (50), and
the beam hollow portion (51) and the end vent hole (55) are in communication with each other.

7. The battery pack of claim 6, comprising a beam connection hole (65) provided at an area where the side pack frame (60) and the support beam (50) are connected to each other, and the beam connection hole (65) is in communication with the end vent hole (55).

8. The battery pack of claim 7, wherein the side pack frame (60) comprises a frame hollow portion (67) extending in a second direction, and
the frame hollow portion (67) is in communication with the beam connection hole (65).

9. The battery pack of claim 8, wherein the lower case (10) further comprises a pack venting device (80) configured to discharge gas leaking from the pouch unit, and
the frame hollow portion (67) is in communication with the pack venting device (80).

10. The battery pack of claim 1, wherein the base plate (20) and the pouch unit are secured to each other by a resin (40) disposed between the base plate (20) and the pouch unit, and
the resin (40) is not disposed at an area along a second direction in which a plurality of base vent holes (23) are arranged along the second direction.

11. The battery pack of claim 10, comprising a vent hole (91) is provided at a position corresponding to the area where the resin (40) is not disposed at a lower surface of the pouch unit (90), and configured to discharge gas generated inside the pouch unit (90) to an outside of the pouch.

12. The battery pack of claim 1, comprising a cooling plate (30) disposed at a lower surface of the base plate (20) and a cooling path provided at the cooling plate, and
the support beam (50) is disposed lower than the cooling plate (30).

13. The battery pack of claim 12, wherein the base vent hole (23) is provided at an area at the base plate (20) where the cooling path is not disposed.

14. The battery pack of claim 13, comprising a corresponding vent hole (33) provided at an area facing the base vent hole (23) at the cooling plate (30), and
the base vent hole (23) and the corresponding hole (33) are in communication with each other.

## Patentansprüche

1. Batteriepack, umfassend:
ein vierseitiges Untergehäuse (10), welches sich in einer ersten Richtung und in einer zweiten Richtung, welche die erste Richtung kreuzt, erstreckt,
wobei das Untergehäuse (10) umfasst:
eine vierseitige Grundplatte (20);
eine vierseitige untere Abdeckung (70), welche nach unten von der Grundplatte (20) beabstandet angeordnet ist und der Grundplatte (20) zugewandt ist;
einen seitlichen Pack-Rahmen (60), welcher mit einem Rand der Grundplatte (20) und einem Rand der unteren Abdeckung (70) verbunden ist, und dazu eingerichtet ist, einen Umfang des Untergehäuses (10) zu bilden;
einen Stützbalken (50), welcher zwischen der Grundplatte (20) und der unteren Abdeckung (70) bereitgestellt ist und sich in der ersten Richtung erstreckt;
einen Wandrahmen (61), welcher in dem seitlichen Pack-Rahmen (60) umfasst ist und sich weiter nach oben als die Grundplatte (20) erstreckt; und
eine Mehrzahl von Beutel-Einheiten (90), welche innerhalb eines Raumes angeordnet sind, welcher von dem Wandrahmen (61) als ein oberer Raum der Grundplatte (20) umgeben ist,
**dadurch gekennzeichnet, dass** der Batteriepack ferner umfasst:
ein Basis-Entlüftungsloch (23), welches an einem vorbestimmten Bereich der Grundplatte (20) bereitgestellt ist, welcher dem Trägerbalken (50) zugewandt ist, und
ein Balken-Entlüftungsloch (53), welches an einer oberen Fläche des Stützbalkens (50) bereitgestellt ist, welche dem Basis-Entlüftungsloch (23) zugewandt ist,
und
wobei das Basis-Entlüftungsloch (23) und das Balken-Entlüftungsloch (53) miteinander in Verbindung stehen.

2. Batteriepack nach Anspruch 1,
wobei kein Element zur Verstärkung der Steifigkeit des Untergehäuses (10) zwischen zwei, in der ersten Richtung oder der zweiten Richtung zueinander benachbarten, Beutel-Einheiten (90) angeordnet ist.

3. Batteriepack nach Anspruch 1,
wobei der Stützbalken (50) mehrfach bereitgestellt ist und die Mehrzahl von Stützbalken (50) in der zweiten Richtung voneinander beabstandet ist.

4. Batteriepack nach Anspruch 1,
wobei beide Enden des Stützbalkens (50) in Verlängerungsrichtung mit den jeweiligen Seiten des seitlichen Pack-Rahmens (60) verbunden sind.

5. Batteriepack nach Anspruch 1,
wobei der Stützbalken (50) einen hohlen Balkenabschnitt (51) umfasst, welcher hohl entlang einer Richtung ist, in welcher sich der Stützbalken (50) erstreckt,
und
wobei das Balken-Entlüftungsloch (53) und der hohle Balkenabschnitt (51) miteinander in Verbindung stehen.

6. Batteriepack nach Anspruch 5, umfassend:
ein End-Entlüftungsloch (55), welches an einem Ende zumindest einer Seite des Stützbalkens (50) bereitgestellt ist, und
wobei der hohle Balkenabschnitt (51) und das End-Entlüftungsloch (55) miteinander in Verbindung stehen.

7. Batteriepack nach Anspruch 6, umfassend:
ein Balken-Verbindungsloch (65), welches in einem Bereich bereitgestellt ist, in welchem der seitliche Pack-Rahmen (60) und der Stützbalken (50) miteinander verbunden sind, und
wobei das Balken-Verbindungsloch (65) mit dem End-Entlüftungsloch (55) in Verbindung steht.

8. Batteriepack nach Anspruch 7,
wobei der seitliche Pack-Rahmen (60) einen hohlen Rahmenabschnitt (67) umfasst, welcher sich in einer zweiten Richtung erstreckt, und
wobei der hohler Rahmenabschnitt (67) mit dem Balken-Verbindungsloch (65) in Verbindung steht.

9. Batteriepack nach Anspruch 8,
wobei das Untergehäuse (10) ferner eine Pack-Entlüftungsvorrichtung (80) umfasst, welche dazu eingerichtet ist, Gas, welches aus der Beutel-Einheit austritt, abzuführen, und
wobei der hohle Rahmenabschnitt (67) mit der Pack-Entlüftungsvorrichtung (80) in Verbindung steht.

10. Batteriepack nach Anspruch 1,
wobei die Grundplatte (20) und die Beutel-Einheit mittels eines Harzes (40) aneinander befestigt sind, welches zwischen der Grundplatte (20) und der Beutel-Einheit angeordnet ist, und
wobei das Harz (40) nicht in einem Bereich entlang einer zweiten Richtung angeordnet ist, in welchem eine Mehrzahl von Basis-Entlüftungslöchern (23) entlang der zweiten Richtung angeordnet ist.

11. Batteriepack nach Anspruch 10, umfassend:
ein Entlüftungsloch (91), welches an einer Position bereitgestellt ist, welche dem Bereich entspricht, in welchem das Harz (40) nicht an einer unteren Fläche der Beutel-Einheit (90) angeordnet ist, und welches dazu eingerichtet ist, das innerhalb der Beutel-Einheit (90) erzeugte Gas nach außerhalb des Beutels abzuführen.

12. Batteriepack nach Anspruch 1, umfassend:
eine Kühlplatte (30), welche an einer unteren Fläche der Grundplatte (20) angeordnet ist, und
einen Kühlweg, welcher an der Kühlplatte bereitgestellt ist, und
wobei der Stützbalken (50) niedriger als die Kühlplatte (30) angeordnet ist.

13. Batteriepack nach Anspruch 12,
wobei das Basis-Entlüftungsloch (23) in einem Bereich an der Grundplatte (20) bereitgestellt ist, in welchem der Kühlweg nicht angeordnet ist.

14. Batteriepack nach Anspruch 13, umfassend:
ein entsprechendes Entlüftungsloch (33), welches in einem Bereich bereitgestellt ist, welcher dem Basis-Entlüftungsloch (23) an der Kühlplatte (30) zugewandt ist, und
wobei das Basis-Entlüftungsloch (23) und das entsprechende Loch (33) miteinander in Verbindung stehen.

## Revendications

1. Bloc-batterie comprenant :
un boîtier inférieur quadrilatéral (10) s'étendant dans une première direction et une seconde direction croisant la première direction,
dans lequel le boîtier inférieur (10) comprend :
une plaque de base quadrilatérale (20) ;
un couvercle de dessous quadrilatéral (70) espacé vers le bas de la plaque de base (20) et destiné à faire face à la plaque de base (20) ;
un cadre de bloc latéral (60) relié à un bord de la plaque de base (20) et à un bord du couvercle de dessous (70), et configuré pour former une périphérie du boîtier inférieur (10) ;
une traverse de support (50) prévue entre la plaque de base (20) et le couvercle de dessous (70), et s'étendant dans la première direction ;
un cadre de paroi (61) compris dans le cadre de bloc latéral (60) et s'étendant plus vers le haut que la plaque de base (20) ; et
une pluralité d'unités poches (90) disposées à l'intérieur d'un espace entouré par le cadre de paroi (61) en tant qu'espace supérieur de la plaque de base (20),
**caractérisé en ce que**
le bloc-batterie comprend en outre
un trou d'évent de base (23) prévu au niveau d'une zone prédéterminée de la plaque de base (20) faisant face à la traverse de support (50), et
un trou d'évent de traverse (53) prévu au niveau d'une surface supérieure de la traverse de support (50) faisant face au trou d'évent de base (23), et
le trou d'évent de base (23) et le trou d'évent de traverse (53) sont en communication l'un avec l'autre.

2. Bloc-batterie selon la revendication 1, dans lequel aucun élément pour renforcer la rigidité du boîtier inférieur (10) n'est disposé entre deux unités poches (90) adjacentes l'une à l'autre dans la première direction ou la seconde direction.

3. Bloc-batterie selon la revendication 1, dans lequel la traverse de support (50) est prévue en plusieurs exemplaires, et
la pluralité de traverses de support (50) sont espacées les unes des autres dans la seconde direction.

4. Bloc-batterie selon la revendication 1, dans lequel les deux extrémités de la direction d'extension de la traverse de support (50) sont reliées à des côtés respectifs du cadre de bloc latéral (60).

5. Bloc-batterie selon la revendication 1, dans lequel
la traverse de support (50) comprend une partie creuse de traverse (51) qui est creuse le long d'une direction dans laquelle la traverse de support (50) s'étend, et
le trou d'évent de traverse (53) et la partie creuse de faisceau (51) sont en communication l'un avec l'autre.

6. Bloc-batterie selon la revendication 5, comprenant un trou d'évent d'extrémité (55) prévu à une extrémité d'au moins un côté de la traverse de support (50), et
la partie creuse de traverse (51) et le trou d'évent d'extrémité (55) sont en communication l'un avec l'autre.

7. Bloc-batterie selon la revendication 6, comprenant un trou de liaison de traverse (65) prévu au niveau d'une zone où le cadre de bloc latéral (60) et la traverse de support (50) sont reliés l'un à l'autre, et le trou de liaison de traverse (65) est en communication avec le trou d'évent d'extrémité (55).

8. Bloc-batterie selon la revendication 7, dans lequel le cadre de bloc latéral (60) comprend une partie creuse de cadre (67) s'étendant dans une seconde direction, et
la partie creuse de cadre (67) est en communication avec le trou de connexion de traverse (65).

9. Bloc-batterie selon la revendication 8, dans lequel le boîtier inférieur (10) comprend en outre un dispositif de ventilation de bloc (80) configuré pour évacuer le gaz fuyant de l'unité poche, et
la partie creuse de cadre (67) est en communication avec le dispositif de ventilation de bloc (80).

10. Bloc-batterie selon la revendication 1, dans lequel la plaque de base (20) et l'unité poche sont fixées l'une à l'autre par une résine (40) disposée entre la plaque de base (20) et l'unité poche, et
la résine (40) n'est pas disposée au niveau d'une zone le long d'une seconde direction dans laquelle une pluralité de trous d'évent de base (23) sont agencés le long de la seconde direction.

11. Bloc-batterie selon la revendication 10, comprenant un trou d'évent (91) est prévu à une position correspondant à la zone où la résine (40) n'est pas disposée au niveau d'une surface inférieure de l'unité poche (90), et configuré pour évacuer le gaz généré à l'intérieur de l'unité poche (90) vers un extérieur de la poche.

12. Bloc-batterie selon la revendication 1, comprenant une plaque de refroidissement (30) disposée au niveau d'une surface inférieure de la plaque de base (20) et un chemin de refroidissement prévu au niveau de la plaque de refroidissement, et
la traverse de support (50) est disposée plus bas que la plaque de refroidissement (30).

13. Bloc-batterie selon la revendication 12, dans lequel le trou d'évent de base (23) est prévu au niveau d'une zone au niveau de la plaque de base (20) où le chemin de refroidissement n'est pas disposé.

14. Bloc-batterie selon la revendication 13, comprenant un trou (33) d'évent correspondant prévu au niveau d'une zone faisant face au trou d'évent de base (23) au niveau de la plaque de refroidissement (30), et
le trou d'évent de base (23) et le trou (33) correspondant sont en communication l'un avec l'autre.
